# FASCICULE DE BREVET EUROPEEN

(11) **EP 3 697 719 B1**
(45) Date de publication et mention de la délivrance du brevet: **01.05.2024**
(21) Numéro de dépôt: 18796736.9
(22) Date de dépôt: 16.10.2018
(51) Int. Cl.: B66F 7/06, B66F 3/06, F16G 13/20

(54) **DISPOSITIF ELEVATOIRE PAR POUSSEE**
SCHUBHEBEVORRICHTUNG
THRUST LIFTING DEVICE

(30) Priorité: 17.10.2017 FR 1759740
(43) Date de publication de la demande: 26.08.2020
(73) Titulaire: Serapid - France, 76370 Rouxmesnil Bouteilles (FR)
(72) Inventeur: SEIGNEUR, Ivan, 76200 Dieppe (FR)
(74) Mandataire: Cabinet Netter
(86) Numéro de dépôt international: PCT/FR2018/052562
(87) Numéro de publication internationale: WO 2019/077254

(56) Documents cités:
- WO-A1-2014/196229
- DE-C- 679 356
- JP-A- 2009 269 751
- JP-A- 2013 216 475
- US-A- 1 916 517

## Description

L'invention concerne une machinerie d'élévation de charges par poussée.

Dans de nombreuses applications, l'élévation de charge est demandée sans que l'élévation puisse se faire par une traction, notamment par un câble ou une courroie de type ascenseur. L'élévation est effectuée par poussée. Par ailleurs, l'encombrement d'un vérin supérieur au double de sa course utile rend sa mise en oeuvre non souhaitable ou impossible dans une grande variété de situations.

Il est alors fait appel à une ou plusieurs chaînes de poussée prévues pour fonctionner en compression et donc pour résister au flambage. De telles chaînes de poussée sont adaptées à des salles de spectacles pour reconfigurer le décor ou la disposition de la salle, à des stades pouvant accueillir plusieurs dizaines de milliers de personnes et demandant des transformations rapides entre une utilisation sportive, musicale, sociale, etc.

Les documents JP 2009 269751 A, WO 2014/196229 A1, JP 2013 216475 A et DE 679 356 C divulguent de tels dispositifs élévatoires munis de chaînes fonctionnant en compression.

Par ailleurs, la demanderesse a repoussé les limites technologiques des chaînes de poussée, notamment en terme de course correspondant à la hauteur entre la position basse et la position haute de l'élément supporté par la chaîne de poussée, en général une plateforme.

Le flambage est un phénomène d'instabilité d'une structure qui soumise à un effort de compression a une tendance à fléchir dans une direction perpendiculaire à l'axe de compression. La formule d'Euler établit que la charge maximale d'une chaîne de poussée est proportionnelle au module d'Young du matériau de la chaîne de poussée, au moment quadratique de la chaîne de poussée et inversement proportionnelle au carré de la longueur de la chaîne soumise à compression. Le module d'Young des matériaux est un paramètre relativement stable dans des conditions économiques définies. La chaîne de poussée est en général en acier pour ses parties soumises à des sollicitations importantes.

Une éventuelle augmentation du moment quadratique se traduit par une augmentation de l'encombrement de la chaîne et par conséquent de l'encombrement de l'ensemble du dispositif en position basse. Une augmentation du moment quadratique se traduit également par une masse de chaîne plus élevée, un montage plus long, un mécanisme d'entraînement et une chaîne plus coûteuse..

En pratique pour une chaîne de poussée donnée, ces contraintes se traduisent par une charge diminuant rapidement lorsque la course augmente.

L'invention vient améliorer la situation.

L'invention propose, dans un premier mode de réalisation, un dispositif élévatoire par poussée apte à transmettre un effort de poussée permettant le levage de charge, comprenant au moins une colonne élévatrice articulée pourvue d'au moins une partie d'engrènement et d'au moins une branche dirigée vers le haut à partir de la partie d'engrènement, la colonne élévatrice étant constituée de maillons avec un maillon de rang 1 à l'extrémité supérieure de la branche dirigée vers le haut et des maillons courants de rang n, avec n compris entre 2 et N le nombre de maillons de la colonne élévatrice, au moins un pignon rotatif entraînant la colonne élévatrice par ladite partie d'engrènement engrenant le pignon, au moins une branche opposée à la branche dirigée vers le haut et formée de maillons au repos, lesdits maillons au repos étant aptes à passer à la partie d'engrènement et à la branche dirigée vers le haut par rotation du pignon, et au moins un stabilisateur mobile le long de la branche dirigée vers le haut. Le stabilisateur mobile détermine la position de la colonne élévatrice dans un plan horizontal à la hauteur à laquelle ledit stabilisateur mobile se trouve. La longueur libre, et par conséquent sujette à flambage, de la colonne élévatrice est réduite.

Toujours dans ce premier mode de réalisation, chaque colonne élévatrice comprend un taquet par stabilisateur mobile. Le taquet est apte à supporter le stabilisateur mobile par un doigt de stabilisateur. Le taquet est supporté par au moins deux barreaux de maillons. Chaque taquet peut être fixé à des maillons de rang égal pour un même stabilisateur mobile dans le cas de pluralité de colonnes élévatrices. Le taquet peut être supporté par deux barreaux de maillons situés entre les joues de maillons selon une direction tout en étant en saillie par rapport aux joues selon une deuxième direction perpendiculaire à la première dans un plan horizontal. Ainsi, les maillons dépourvus de taquets restent à distance du doigt de stabilisateur. Le taquet, se rapprochant de la bague de stabilisateur, vient soulever le stabilisateur et supporter le doigt de stabilisateur.

L'invention propose, dans un second mode de réalisation, un dispositif élévatoire par poussée apte à transmettre un effort de poussée permettant le levage de charge, comprenant au moins une colonne élévatrice articulée pourvue d'au moins une partie d'engrènement et d'au moins une branche dirigée vers le haut à partir de la partie d'engrènement, la colonne élévatrice étant constituée de maillons avec un maillon de rang 1 à l'extrémité supérieure de la branche dirigée vers le haut et des maillons courants de rang n, avec n compris entre 2 et N le nombre de maillons de la colonne élévatrice, au moins un pignon rotatif entraînant la colonne élévatrice par ladite partie d'engrènement engrenant le pignon, au moins une branche opposée à la branche dirigée vers le haut et formée de maillons au repos, lesdits maillons au repos étant aptes à passer à la partie d'engrènement et à la branche dirigée vers le haut par rotation du pignon, et au moins un stabilisateur mobile le long de la branche dirigée vers le haut. Toujours dans ce second mode de réalisation, chaque stabilisateur mobile comprend une bague par colonne élévatrice et un châssis reliant rigidement les bagues. Ainsi, les colonnes élévatrices d'un dispositif sont stabilisées par le ou les stabilisateurs. Leurs positions relatives sont localement fixées dans un plan horizontal. Toujours dans ce second mode de réalisation, ladite bague comprend un organe de coulissement par rapport à la colonne élévatrice correspondante et un doigt de stabilisateur pour entraîner le stabilisateur mobile en mouvement. Le doigt de stabilisateur peut être en appui sur la colonne élévatrice correspondante. Sont ainsi prévus, à la fois, une liberté de coulissement et un entraînement. La liberté de coulissement peut être mise à profit pour laisser un coulissement libre sur une portion de course au moins égale à la moitié de la course totale dans le cas d'un stabilisateur unique, d'un tiers de la course dans le cas de deux stabilisateurs espacés eux-mêmes d'un tiers de la course totale, etc.

Le stabilisateur mobile stabilise la colonne élévatrice en position dans le plan horizontal et en orientation. En d'autres termes, dans la zone dans laquelle le stabilisateur agit sur la colonne élévatrice, la colonne élévatrice présente une position nominale et une dérivée nominale de la position égale à zéro. Dans ladite zone, la colonne élévatrice est donc située dans la position voulue et orientée en l'axe de la colonne élévatrice.

Le stabilisateur étant entraîné par les colonnes élévatrices, il est possible de se passer d'une motorisation supplémentaire.

Dans un mode de réalisation, l'organe de coulissement forme un guide de maillons, en contact avec deux maillons. Ainsi, deux maillons successifs sont stabilisés dans les deux axes d'un plan horizontal d'où une stabilisation en position et en orientation. En d'autres termes, le stabilisateur assure la position nominale des deux maillons avec lesquels il interagit et le parallélisme de l'axe desdits maillons avec l'axe Z tant pour le maillon de rang n et le maillon de rang n+1.

Dans un mode de réalisation, l'organe de coulissement forme un guide de galets de maillons. L'organe de coulissement peut ainsi coopérer avec des galets de maillons, par exemple disposé aux extrémités des barreaux reliant les maillons. Dans le cas de galets libres en rotation, le frottement est réduit. Préférablement, l'organe de coulissement est en contact avec au moins trois galets.

Dans un mode de réalisation, l'organe de coulissement est disposé entre deux rangées de galets venant en contact avec des surfaces opposées de l'organe de coulissement.

Dans un autre mode de réalisation, l'organe de coulissement est disposé de part et d'autre d'une rangée de galets, par exemple par deux surfaces se faisant face, notamment dans le cas d'une seule rangée de galets.

Dans un mode de réalisation, l'organe de coulissement forme un guide de joues de maillons. L'organe de coulissement peut être en contact avec deux maillons sur une partie de la hauteur de chacun des deux maillons.

Dans un autre mode de réalisation, l'organe de coulissement forme un guide de patins de colonnes. Les patins sont fixés aux maillons ou aux barreaux des maillons. Les patins peuvent être en saillie au-delà des barreaux de maillons.

Dans un mode de réalisation, chaque stabilisateur mobile comprend au moins un amortisseur par colonne élévatrice. L'amortisseur réduit l'accélération du stabilisateur lorsque le doigt de stabilisateur entre en contact avec la colonne élévatrice, et réduit l'accélération du stabilisateur à l'arrivée du stabilisateur en position basse. On peut ainsi opérer à vitesse sensiblement constante sur la majorité de la course du dispositif. On peut se passer d'une réduction de la vitesse, vers le haut ou vers le bas lorsque le stabilisateur est emmené vers le haut par la colonne élévatrice ou est déposé en position basse. Le même amortisseur peut être opératoire pour le doigt de stabilisateur l'entrée en contact du doigt de stabilisateur avec la colonne élévatrice et l'arrivée du stabilisateur en position basse.

Dans un mode de réalisation, chaque colonne élévatrice comprend au moins deux taquets. Les taquets de chaque colonne élévatrice sont disposés avec un décalage dans un plan horizontal de façon qu'un premier taquet vienne supporter un premier doigt avec avoir passé à côté d'un deuxième doigt et qu'un deuxième taquet vienne supporter le deuxième doigt. Les premier et deuxième taquets sont disposés à des endroits différents de la colonne élévatrice, par exemple associés des maillons de rang N/3 et 2N/3 dans le cas de deux taquets et de deux stabilisateurs.

Dans un mode de réalisation, chaque stabilisateur mobile est guidé par au moins un rail de guidage d'une plateforme du dispositif élévatoire. Le rail de guidage assurant le guidage de la plateforme du dispositif, assure également le guidage du stabilisateur mobile. Le stabilisateur mobile peut être muni de patins ou de galets coopérant avec le rail de guidage. Le stabilisateur, quelle que soit sa position en élévation, est dans une position déterminée en X et en Y.

Dans un autre mode de réalisation, le dispositif comprend une paire inférieure de supports à ciseau et une paire supérieure de supports à ciseau, le stabilisateur mobile étant monté entre lesdites paires de supports à ciseau. Ainsi, le stabilisateur mobile se déplace à une vitesse déterminée par la vitesse des colonnes élévatrices et sensiblement égale à la moitié de la vitesse des colonnes élévatrices tout en assurant leur stabilisation.

Dans un mode de réalisation, le dispositif comprend au moins une branche opposée à la branche dirigée vers le haut et formée de maillons au repos. Lesdits maillons au repos sont aptes à passer à la partie d'engrènement et à la branche dirigée vers le haut par rotation du pignon. Ladite branche opposée stocke les maillons au repos. Le stockage peut être linéaire ou de manière enroulée.

Dans un mode de réalisation, le maillon comprend deux joues symétriques, de forme générale rectantulaire, d'épaisseur sensiblement constante perpendiculairement à son plan principal.

Dans un mode de réalisation, la joue est:
- un plat simple superposé en épaisseur,
- un plat pressé à décalage d'épaisseur, ou
- une pièce usinée.

Dans un mode de réalisation, le dispositif comprend au moins deux colonnes élévatrices articulées pourvues chacune d'au moins une partie d'engrènement et d'au moins une branche dirigée vers le haut à partir de la partie d'engrènement, chaque colonne élévatrice étant constituée de maillons avec un maillon de rang 1 à l'extrémité supérieure de la branche dirigée vers le haut et des maillons courants de rang n, avec n compris entre 2 et N le nombre de maillons de la colonne élévatrice, au moins deux pignons rotatifs entraînant chacun une desdites colonnes élévatrices par ladite partie d'engrènement engrenant un desdits pignons, au moins deux branches opposées aux branches dirigées vers le haut respectivement, et formées de maillons au repos, lesdits maillons au repos étant aptes à passer aux parties d'engrènement et aux branches dirigées vers le haut par rotation du pignon, et au moins un stabilisateur mobile le long desdites branches dirigées vers le haut.

Dans un exemple de réalisation non couvert par les revendications, chaque stabilisateur mobile est disposé au voisinage du maillon de rang B/(p+1) ou de rang multiple de B(p+1), en position haute du dispositif élévatoire, avec B le nombre de maillons de la branche dirigée vers le haut en position haute du dispositif élévatoire et p le nombre de stabilisateurs mobiles. Préférablement, p = 1, 2 ou 3.

On peut ainsi doubler, tripler voire quadrupler la hauteur de course d'un dispositif élévatoire.

D'autres caractéristiques, détails et avantages de l'invention, apparaîtront à la lecture de la description détaillée ci-après, et des dessins annexés, sur lesquels :
- les figures 1 à 3 sont des vues en perspective d'un dispositif élévatoire selon un aspect de l'invention respectivement en position haute, intermédiaire et basse,
- la figure 4 est une vue de face en élévation, une portion de colonnes élévatrices passant dans une bague de stabilisateur,
- la figure 5 est une vue en coupe selon V-V de la figure 4,
- la figure 6 est une vue en perspective correspondant aux figures 4 et 5,
- les figures 7 et 8 sont des vues de détail en perspective de deux taquets et de deux doigts de stabilisateur,
- la figure 9 est une vue schématique en coupe dans un plan horizontal d'une colonne élévatrice passant dans une bague de stabilisateur,
- la figure 10 est une vue similaire à la figure 9 avec un autre type de bague de stabilisateur,
- la figure 11 est une vue schématique partielle en coupe d'un stabilisateur muni d'un amortisseur,
- la figure 12 est une vue d'un stabilisateur supporté par colonne élévatrice,
- la figure 13 est une vue d'un stabilisateur supporté par un plateau,
- la figure 14 est une vue d'un stabilisateur supporté par des ciseaux,
- la figure 15 est une vue d'un stabilisateur supporté par câbles,
- la figure 16 est une vue d'un stabilisateur supporté par colonne élévatrice,
- la figure 17 est une vue d'un dispositif à plusieurs stabilisateurs supporté par colonne élévatrice, et
- la figure 18 est une vue de détail en perspective d'un stabilisateur en position basse.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

L'invention peut s'appliquer à différents types de colonnes élévatrices, notamment comportant des maillons selon AU 2010212303, US 2009/008615, FR 2 573 832, FR 2 345 626, FR 2 786 476 ou encore FR 2 780 472 ainsi que FR 3 043 747 auquel le lecteur est invité à se reporter.

Les chaînes de poussée dans les applications de grande hauteur tendent à flamber. Le flambage est un déplacement latéral de la chaîne de poussée essentiellement verticale. Le flambage selon l'axe des maillons de chaîne peut être limité par un ajustement serré des éléments de la chaîne. Le flambage perpendiculaire à l'axe des maillons de chaîne est critique en raison de l'aptitude de la chaîne à se plier d'un maillon à l'autre.

Pour contrecarrer le flambage, la Demanderesse a mis au point un dispositif élévatoire 1 par poussée illustré sur les figures. Le dispositif élévatoire 1 est apte à transmettre un effort de poussée permettant le levage de charges.

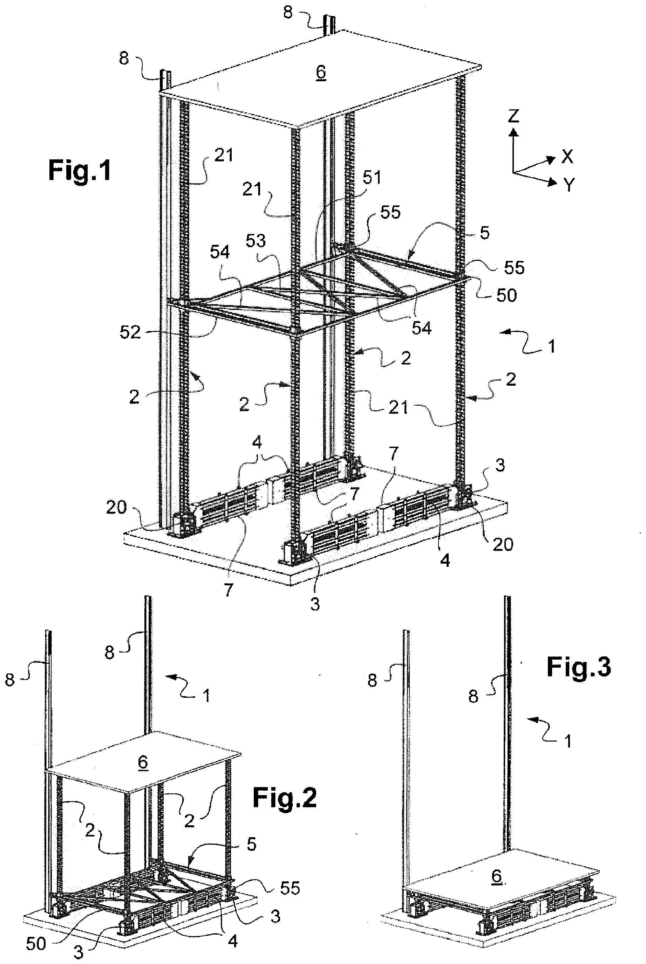

Dans le mode illustré sur les figures 1 à 3, le dispositif élévatoire 1 comprend quatre colonnes élévatrices 2 articulées, quatre pignons 3 rotatifs entraînant chacun une desdites colonnes élévatrices 2, quatre branches opposées 4, et un stabilisateur mobile 5. Les colonnes élévatrices 2 supportent un plateau 6, par exemple un plateau de salle de spectacle. Le dispositif élévatoire 1 repose sur un socle.

Chaque colonne élévatrice 2 est pourvue d'au moins une partie d'engrènement 20, et d'au moins une branche dirigée vers le haut 21 à partir de la partie d'engrènement 20. La colonne élévatrice 2 est constituée de maillons 22 avec un maillon de rang 1 à l'extrémité supérieure de la branche dirigée vers le haut 21 et des maillons courants de rang n, avec n compris entre 2 et N le nombre de maillons 22 de la colonne élévatrice 2. Les maillons courants de rang n font partie soit de la partie d'engrènement 20, soit de la branche dirigée vers le haut 21, selon la position de la colonne élévatrice 2 en élévation.

Par exemple, en position basse, le maillon de rang 3 est dans la partie d'engrènement 20 et passe à la branche dirigée vers le haut 21 rapidement après le début de l'élévation ; en position basse, le maillon de rang N-3 est dans la branche opposée 4 et passe à la partie d'engrènement 20 puis à la branche dirigée vers le haut 21 près de la fin de l'élévation.

Le pignon 3 est en liaison permanente d'engrènement avec ladite partie d'engrènement 20. La partie d'engrènement 20 peut être droite, par exemple alignée sur la branche dirigée vers le haut 21, ou, de préférence, arrondie épousant la forme du pignon 3. Le pignon 3 est entraîné par une motorisation électrique, éventuellement avec réducteur, ou hydraulique.

La branche opposée 4 à la branche dirigée vers le haut 21 est formée de maillons 22 au repos. Les maillons 22 au repos sont aptes à passer à la partie d'engrènement 20 puis à la branche dirigée vers le haut 21 par rotation du pignon 3 dans le sens de l'élévation. Les maillons 22 actifs c'est-à-dire soumis à compression, sont aptes à passer à la partie d'engrènement 20 puis à la branche opposée 4 par rotation du pignon 3 dans le sens de la descente.

La branche opposée 4 est logée dans un magasin 7. Le magasin 7 est, de préférence, horizontal. Les quatre magasins 7 peuvent être disposés sur deux parallèles, l'extrémité d'un premier magasin 7 opposée à un premier pignon 3 étant en regard de l'extrémité d'un deuxième magasin 7 opposée à un deuxième pignon 3. Chaque magasin 7 peut contenir les maillons 22 au repos sur une rangée ou, de préférence, plusieurs rangées avec pliage en extrémité de rangée. Les maillons 22 au repos peuvent former une spirale aplatie. Pour une faible hauteur de manoeuvre, les maillons 22 au repos peuvent former un segment droit.

Le stabilisateur 5 est mobile le long des branches dirigées vers le haut 21. Le stabilisateur mobile 5 est apte à stabiliser la colonne élévatrice 2 en position dans le plan horizontal et en orientation. Le stabilisateur 5 se présente sous la forme d'un châssis 50 entretoisé. Le stabilisateur 5 peut être mécanosoudé.

Ici, le stabilisateur 5 comprend un châssis rectangulaire 50 à deux longerons 51 et deux traverses 52 ; deux entretoises 53 intermédiaires parallèles aux traverses 52 et espacées de manière égale ; et quatre jambes diagonales 54, l'une s'étendant d'une traverse 52 d'extrémité à une entretoise 53 intermédiaire, la deuxième s'étendant de la traverse 52 d'extrémité opposée à l'entretoise 53 intermédiaire opposée et les troisième et quatrième se croisant en X entre les deux entretoises 53 intermédiaires. Deux V croisés sont formés. Le châssis 50 présente un encombrement faible en hauteur, défini par la hauteur des poutres le constituant, et une faible masse.

Chaque stabilisateur mobile 5 comprend une bague 55 par colonne élévatrice 2. Le châssis 50 relie rigidement les bagues 55. Chaque bague 55 comprend un organe de coulissement 56 par rapport à la colonne élévatrice 2 correspondante et un doigt 57 de stabilisateur 5 pour entraîner le stabilisateur mobile 5 en mouvement.

Le doigt 57 de stabilisateur est en appui sur la colonne élévatrice 2 correspondante dans la position de la figure 1, soit en élévation maximale. Le doigt 57 de stabilisateur est inactif dans la position de la figure 3, en position basse.

Dans la position de la figure 2, à mi-course, le doigt 57 de stabilisateur prend contact sur la colonne élévatrice 2 correspondante alors que le stabilisateur 5 est encore en position basse. Dans la position des figures 2 et 3, le stabilisateur mobile 5 repose sur les bâtis supportant également les pignons 3. Ainsi, au cours de la première partie de la course de montée, le stabilisateur mobile 5 reste en position basse, et au cours de la deuxième partie de la course de montée, le stabilisateur mobile 5 s'élève à la même vitesse que le plateau 6.

Dans le mode représenté, le stabilisateur 5 est au repos sur la première moitié de la course de la colonne élévatrice 2 et est supporté au voisinage du maillon de rang N/2±1 sur la deuxième moitié de ladite course.

Le doigt 57 présente une forme de T inversé à barre asymétrique. Le pied 58 du T est fixé à la bague 55, ici par des vis. La grande partie 59 de la barre du T passe sous la bague 55 tout en pouvant transmettre directement un effort de compression, soulageant ainsi les vis. La grande partie 59 de la barre du T est en saillie entre les joues 26 de maillons 22 selon une direction perpendiculaire aux axes des barreaux 24 tout en restant distante des barreaux 24. La grande partie 59 de la barre du T est en interférence avec un taquet 23 selon les positions respectives de ladite grande partie et dudit taquet 23 selon l'axe des barreaux 24.

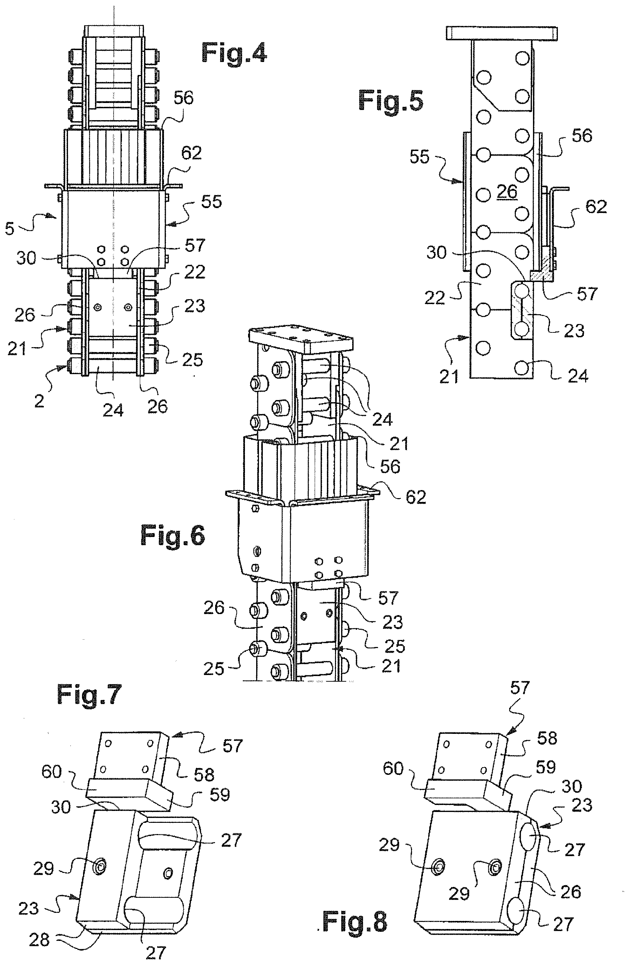

Sur la figure 7, la grande partie 59 de la barre du T occupe sensiblement l'espace entre les joues intérieures de maillons 22 de manière à intercepter sensiblement tout taquet 23 en cours de montée. Sur la figure 8, la grande partie 59 de la barre du T occupe sensiblement la moitié de l'espace entre les joues intérieures de maillons 22 de manière à intercepter un taquet 23 correspondant et à laisser passer un taquet 23 non interférent, pour un autre stabilisateur, comme le taquet 23 de la figure 7, en cours de montée.

La petite partie 60 de la barre du T est en saillie de quelques millimètres, cf figure 5. La petite partie 60 de la barre du T est en saillie de l'épaisseur d'une collerette 62 de bague 55 de manière à transmettre directement à l'extrémité inférieure de la collerette 62 un effort de compression.

L'organe de coulissement 56 peut comprendre des patins 61 en matériau à faible coefficient de frottement.

L'organe de coulissement 56 forme un fourreau ou guide de maillons 22, en contact avec deux maillons 22. La hauteur de l'organe de coulissement 56 supérieure à la hauteur d'un maillon 22 permet de s'assurer de la position de deux maillons 22 en X et en Y et selon les angles (X^Z) et (Y^Z). En d'autres termes, la position dans le plan horizontal et l'orientation verticale de deux maillons 22. Lesdits deux maillons 22 coopérant avec l'organe de coulissement 56 sont de rang N/2±1 dans le cas d'un stabilisateur, de rangs N/3±1 et 2N/3±1 dans le cas de deux stabilisateurs, etc.

La bague 55 entoure la branche dirigée vers le haut 21 de la colonne élévatrice 2 sur les quatre côtés. La bague 55 comprend une collerette 62 pliée à l'opposé de la branche dirigée vers le haut 21. La collerette 62 est horizontale. La collerette 62 est munie de perçages de fixation pour le châssis 50. La bague 55 s'étend, cf figure 5, sur une hauteur supérieure à la hauteur de deux maillons 22. Plus précisément, la bague 55 s'étend du barreau 24 milieu d'un maillon de rang n au barreau 24 inférieur du maillon de rang n+2.

La colonne élévatrice 2 est formée de maillons 22 articulés sur des barreaux 24 munis de galets 25, cf figures 4 à 6. Les galets 25 sont prévus pour entrer en contact avec le pignon 3. Les maillons 22 comprennent des joues 26 disposées symétriquement par rapport à un plan central. Les joues 26 sont identiques les unes aux autres. Les joues 26 sont d'épaisseur sensiblement constante perpendiculairement à leur plan principal.

Ici, les joues 26 présentent la forme de plats de forme générale rectangulaire, à coins arrondis vers l'axe de pivotement. Les joues 26 sont formées de plats simples superposés en épaisseur. En variante, les joues 26 sont formées de plats à décalage d'épaisseur formés à la presse ou de pièces usinées.

Des perçages et des encoches sont ménagés dans les plats pour le montage des barreaux. Les joues 26 sont disposées en deux rangées de joues extérieures et deux rangées de joues intérieures en contact. Les joues 26 s'appuient l'une sur l'autre par leur tranche perpendiculaire à l'axe de la colonne 2. Les joues 26 sont prévues avec deux perçages du côté de l'axe de pivotement et un perçage et deux encoches à l'opposé de l'axe de pivotement. Deux encoches de deux joues superposées forment l'équivalent d'un perçage et laissent passer un barreau 24. Les barreaux 24 sont disposés en quinconce en vue de côté, cf figure 5. Les joues extérieures sont décalées d'une demi-hauteur de joue par rapport aux joues intérieures.

Les galets 25 peuvent être disposés sur des extrémités des barreaux 24 au-delà des maillons 22. L'organe de coulissement 56 forme un guide de galets de maillons, préférablement en contact avec au moins trois galets 25. La liberté de rotation des galets 25 est mise à profit, non seulement pour coopérer avec le pignon 3 correspondant, mais aussi avec l'organe de coulissement 56 correspondant.

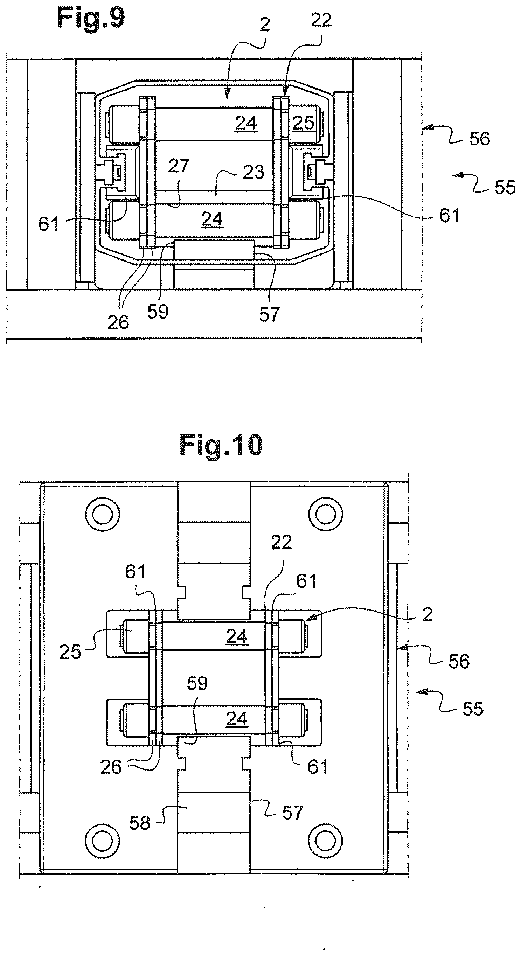

L'organe de coulissement 56 est disposé entre deux rangées de galets 25 ou de part et d'autre d'une rangée de galets 25, cf figure 9.

L'organe de coulissement 56 forme un guide de joues de maillons, cf figure 10. L'organe de coulissement 56 est en contact avec deux maillons 22 sur une partie de la hauteur de chacun des deux maillons 22.

En variante, l'organe de coulissement 56 est en contact avec un guide de patins de colonne, les patins étant fixés aux maillons 22 ou aux barreaux 24 de maillons.

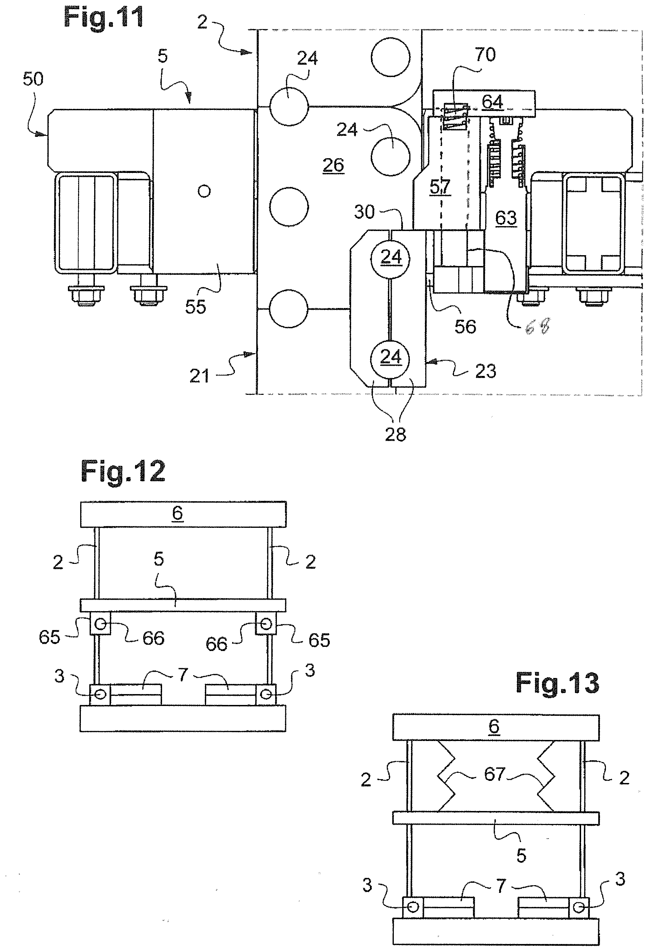

Dans le mode de réalisation de la figure 11, le stabilisateur mobile 5 comprend un amortisseur 63, cf figure 11, par colonne élévatrice 2. L'amortisseur 63 est disposé entre le doigt 57 de stabilisateur d'une part et l'organe de coulissement 56. Le doigt 57 est monté à coulissement selon l'axe Z par rapport à l'organe de coulissement 56. Le coulissement du doigt 57 se produit le long d'un rail 68. Le rail 68 est fixé à la bague 55. Le rail 68 est monté selon l'axe Z. Le rail 68 est disposé dans l'encombrement en hauteur de la bague 55. L'amortisseur 63 est disposé parallèlement au doigt 57.

L'amortisseur 63 est relié au doigt 57 par une potence 64 fixée au doigt 57 dans une zone supérieure de l'organe de coulissement 56. La potence 64 vient coiffer l'amortisseur 63et est fixée à une extrémité supérieure de l'amortisseur 63. Une extrémité inférieure de l'amortisseur 63 est fixée à l'organe de coulissement 56. La potence 64 et le doigt 57 sont montés à coulissement. Un ressort 70 est disposé entre la potence 64 et le doigt 57, par exemple dans des trous borgnes ménagés dans la potence 64 et le doigt 57. En position d'entraînement du stabilisateur 5, le ressort 70 est comprimé. En position basse du stabilisateur 5, le doigt 57 est distant du taquet 23 et le ressort 70 est détendu.

Lorsque le taquet 23 rencontre le doigt 57, par sa surface supérieure 30, le doigt 57 peut se déplacer par rapport à l'organe de coulissement 56 avec amortissement dudit déplacement par l'amortisseur 63.

Dans le cas de plusieurs stabilisateurs mobiles, un amortisseur 63 est prévu par colonne élévatrice 2 et par stabilisateur mobile 5. L'amortisseur 63 réduit l'accélération du stabilisateur 5 lorsque le doigt 57 de stabilisateur entre en contact avec la colonne élévatrice 2. Les efforts et les vibrations mécaniques dans la colonne élévatrice 2 et dans le pignon 3, et le bruit sont réduits.

En l'absence d'un tel amortisseur, le doigt 57 est fixé à demeure à la bague 55.

Chaque stabilisateur mobile 5 comprend au moins un amortisseur actif au voisinage de la position basse. L'amortisseur de position basse réduit l'accélération du stabilisateur 5 à l'arrivée du stabilisateur en position basse. Les vibrations mécaniques et le bruit sont réduits.

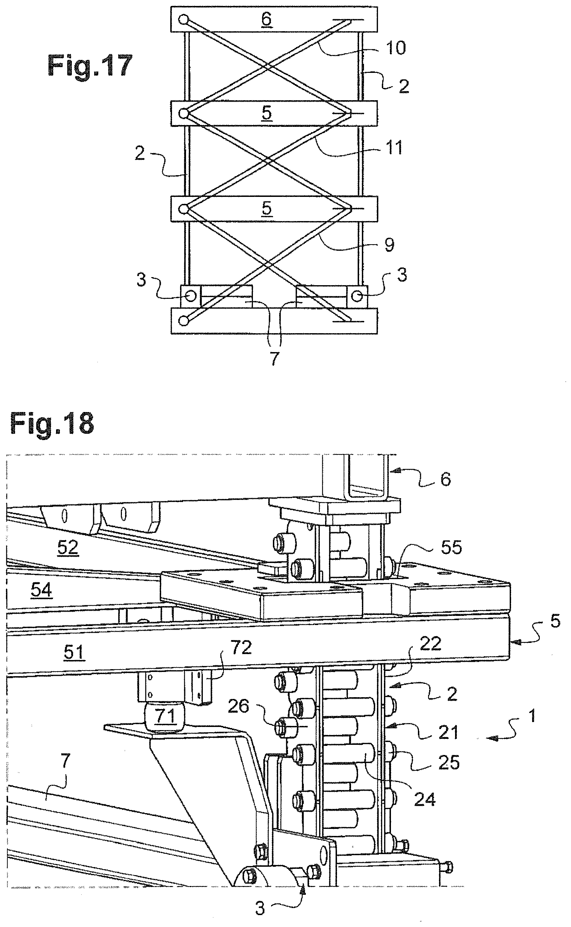

Comme représenté, l'amortisseur 63 est également lors de l'arrivée du stabilisateur 5 en position basse. A cet effet, voir figure 18, le châssis 50 est muni d'un amortisseur inférieur 71 dirigé vers le bas. L'amortisseur 71 est prévu pour coopérer avec une surface correspondante d'une partie stationnaire du dispositif 1. Ladite surface peut être horizontale. Ladite surface peut être formée à partir d'un bras dirigé vers le haut. L'amortisseur 71 peut être relié à une platine 72 fixée, par exemple vissée, au châssis 50. L'amortisseur 71 peut être constitué d'un bloc de matériau élastomère. Lorsque le taquet 23 vient entraîner le doigt 57 pour lever le stabilisateur 5, l'amortisseur 71 est séparé de la surface stationnaire. À la descente du stabilisateur 5, l'amortisseur 71 vient de tamponner la surface stationnaire. Le taquet 23 s'éloigne du doigt 57. La masse du stabilisateur 5 repose sur l'amortisseur 71. La colonne 2 est désintéressée de la masse du stabilisateur 5. L'accostage vers le bas du stabilisateur 5 est amorti.

Chaque colonne élévatrice 2 comprend un taquet 23 par stabilisateur mobile 5. Le taquet 23 est apte à supporter ledit stabilisateur mobile 5, notamment par appui sur un doigt 57 de stabilisateur. Le taquet 23 est solidaire de la branche dirigée vers le haut 21 de la colonne élévatrice 2. Le taquet 23 est fixé à au moins un axe de maillons.

Comme illustré sur les figures 4 à 8, le taquet 23 est supporté par deux barreaux 24 de maillons appartenant à une même rangée. La rangée de barreaux 24 est voisine de l'axe de pivotement des maillons. Chaque taquet 23 est fixé à des maillons 22 de rang égal pour un même stabilisateur mobile 5 dans le cas d'au moins deux colonnes élévatrices 2.

Le taquet 23 présente une forme générale de parallélépipède rectangle avec une dimension principale dans le sens de la hauteur, une dimension secondaire dans le sens des axes des barreaux 24, et une dimension troisième dans le sens perpendiculaire aux axes des barreaux 24. Des chanfreins sont ménagés sur les arêtes horizontales faisant face à l'autre rangée de barreaux 24, distale de l'axe de pivotement des maillons, dans ce cas.

Le taquet 23 présente une surface supérieure 30 disposée parallèlement au plan XY. La surface supérieure 30 présente une arête franche, i.e. à faible rayon de congé de raccordement, avec une surface du taquet 23 affleurant les bords de maillons 22. La surface supérieure 30 forme support pour le stabilisateur 5 en position autre que basse.

Le taquet 23 présente deux trous traversants 27 dans chacun desquels passe un barreau 24 de maillon. Le taquet 23 est disposé entre deux joues 26 de maillon. Le taquet 23 est affleurant des bords de joues de maillon, conservant l'encombrement de la colonne élévatrice 2. Le taquet 23 est monté du côté de la colonne élévatrice 2 opposé au pignon 3.

Le taquet 23 comprend, ici, deux pièces 28 de forme semblable séparées par un plan passant par les axes des deux barreaux 24 en prise avec le taquet 23. Lesdites pièces 28 sont en contact par ledit plan. Lesdites pièces 28 sont en contact entre les deux barreaux 24, et au-delà de chaque barreau 24. Lesdites pièces 28 sont maintenues ensemble. Lesdites pièces 28 sont serrées par au moins une vis 29 passant dans un trou traversant lisse d'une des pièces et venant en prise dans un trou taraudé de l'autre pièce.

Dans le mode de la figure 7, l'une desdites pièces présente une largeur plus faible que l'autre pièce, dans le sens de l'axe des barreaux 24. En coordination avec la forme des doigts de stabilisateur, ceci permet au taquet 23 de la figure 7 de soulever le doigt 57 de la figure 7 et de passer à côté du doigt 57 de la figure 8. Le taquet 23 de la figure 7 est capable de rester inactif sur un doigt 57 d'un stabilisateur inférieur et de venir soulever un doigt 57 d'un stabilisateur supérieur, dans le cas de deux stabilisateurs. Les deux stabilisateurs 5 sont superposés en position basse et espacés en position haute.

Dans le mode de la figure 8, lesdites pièces 28 présentent une largeur égale, dans le sens de l'axe des barreaux 24. Le taquet 23 est prévu pour supporter un stabilisateur 5 unique ou un stabilisateur 5 inférieur.

Chaque colonne élévatrice 2 comprend au moins deux taquets 23. Les taquets 23 de chaque colonne élévatrice 2 sont disposés avec un décalage dans un plan horizontal de façon qu'un premier taquet 23 vienne supporter un premier doigt 57 après avoir passé à côté d'un deuxième doigt 57 et qu'un deuxième taquet 23 vienne supporter le deuxième doigt 57.

Le dispositif élévatoire 1 comprend deux rails 8 de guidage du plateau 6. La position en X et en Y du plateau 6 est déterminée par les rails 8 de guidage. En variante, un rail 8 de guidage peut suffire. Chaque stabilisateur mobile 5 est guidé par au moins un rail 8 de guidage. Chaque stabilisateur mobile 5 est muni d'un organe de coopération avec le rail 8 de guidage correspondant, par exemple sous la forme de patins.

Dans le mode de la figure 12, le stabilisateur 5 est entraîné par une motorisation embarquée 65 sur ledit stabilisateur 5 et couplée à des pignons 66 analogues au pignon 3. Le stabilisateur 5 est alors apte à se déplacer en autonomie le long des colonnes élévatrices 2. Ce mode permet de régler la hauteur du stabilisateur 5 indépendamment de la hauteur du plateau 6, par exemple pour des travaux utilisant le stabilisateur 5 comme plate-forme de travail.

Dans le mode de la figure 13, le stabilisateur 5 est entraîné par une liaison souple 67 comprenant une extrémité fixée au plateau 6 et une extrémité fixée au stabilisateur 5.

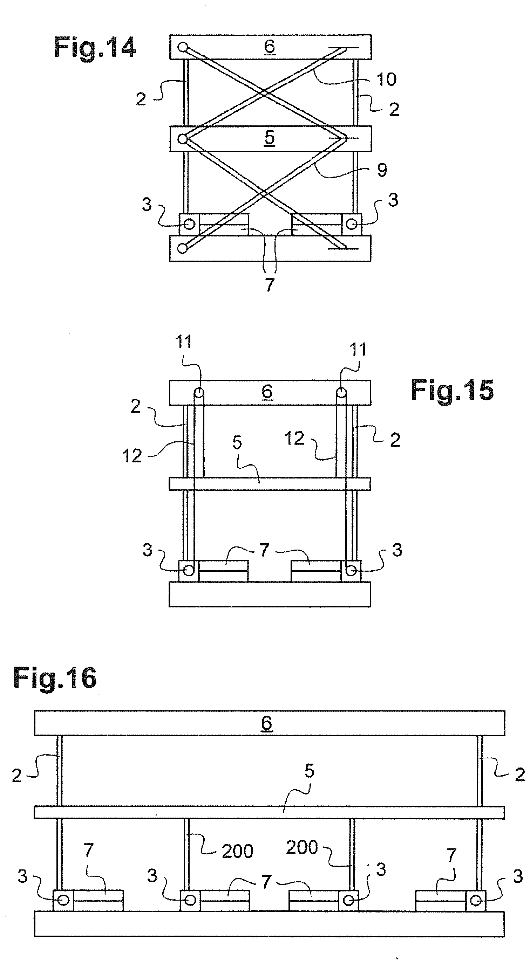

Dans le mode de la figure 14, le dispositif élévatoire 1 comprend une paire inférieure de supports à ciseaux 9 et une paire supérieure de supports à ciseaux 10. Le stabilisateur mobile 5 est monté entre lesdites paires de supports à ciseaux. La paire inférieure de supports à ciseaux 9 est montée entre le stabilisateur mobile 5 et le socle. La paire supérieure de supports à ciseaux 10 est montée entre le stabilisateur mobile 5 et le plateau 6.

Chaque paire de supports à ciseaux 9, 10 présente une structure en X articulée en son centre, à une extrémité inférieure et à une extrémité supérieure et montée à coulissement limité à l'autre extrémité inférieure et à l'autre extrémité supérieure. Le déplacement du plateau 6 entraîne la paire supérieure de supports à ciseaux 10, puis une fois celle-ci en butée de coulissement, le stabilisateur mobile 5 la et paire inférieure de supports à ciseaux 9. Les paires de supports à ciseaux 9, 10 assurent, convenablement entretoisés, une excellente stabilité latérale.

Dans le mode de la figure 15, le dispositif élévatoire 1 comprend un mécanisme à poulie et câble entraînant le stabilisateur mobile 5. Le mécanisme à poulie et câble comprend une poulie 11 montée folle sur le plateau 6 et un câble 12 passant par la poulie 11 et fixé à une extrémité au stabilisateur mobile 5 et à l'autre extrémité à une partie stationnaire du dispositif élévatoire 1, près du socle. La longueur du câble 12 est telle que le stabilisateur mobile 5 se trouve à mi-hauteur lorsque le plateau 6 est en position haute. En variante, ladite autre extrémité est entraînée par l'arbre du pignon 3, couplé à un tambour d'enroulement.

Dans le mode de la figure 16, le dispositif élévatoire 1 comprend au moins deux colonnes élévatrices 200 supplémentaires dédiées au stabilisateur mobile 5. Le stabilisateur mobile 5 est indépendant en hauteur du plateau 6 et des colonnes élévatrices 2 supportant le plateau 6. La course réduite et la faible masse du stabilisateur mobile 5 font que les colonnes élévatrices 200 peuvent être d'un modèle réduit par rapport au modèle des colonnes élévatrices 2. Avantageusement, les orientations des colonnes élévatrices 200 par rapport aux colonnes élévatrices 2 sont choisies pour une bonne stabilité.

Le mode de la figure 17 est similaire au mode de la figure 14, le dispositif élévatoire 1 comprenant deux stabilisateurs mobiles 5 et trois paires de supports à ciseaux, inférieure 9, intermédiaire 11 et supérieure 10. Chaque stabilisateur mobile 5 est monté entre deux paires de supports à ciseaux. Un déplacement à course élevée est obtenu.

Dans les modes représentés, le dispositif élévatoire 1 comprend au moins deux, par exemple quatre, colonnes élévatrices 2 articulées pourvue chacune d'au moins une partie d'engrènement 20, et d'au moins une branche dirigée vers le haut 21 à partir de la partie d'engrènement 20. Chaque colonne élévatrice 2 est constituée de maillons 22 avec un maillon de rang 1 à l'extrémité supérieure de la branche dirigée vers le haut 21 et des maillons courants de rang n, avec n compris entre 2 et N le nombre de maillons 22 de la colonne élévatrice. Le dispositif élévatoire 1 comprend au moins deux, par exemple quatre, pignons 3 rotatifs entraînant chacun la colonne élévatrice 2 correspondante par ladite partie d'engrènement 20 engrenant le pignon 3. Le dispositif élévatoire 1 comprend au moins deux, par exemple quatre, branches opposées 4 aux branches dirigées vers le haut respectivement et formées de maillons 22 au repos. Lesdits maillons 22 au repos sont aptes à passer aux parties d'engrènement et aux branches dirigées vers le haut par rotation du pignon 3 correspondant. Le dispositif élévatoire 1 comprend au moins un stabilisateur mobile 5 le long desdites branches dirigées vers le haut. Le stabilisateur mobile 5 est apte à être entraîné par chacune des colonnes élévatrices 2.

Chaque stabilisateur mobile 5 est disposé au voisinage du maillon de rang B/(p+1) ou multiple de B/(p+1), en position haute du dispositif élévatoire, avec B le nombre de maillons 22 de la branche dirigée vers le haut 21 en position haute du dispositif élévatoire, et p le nombre de stabilisateurs mobiles, préférablement p étant égal à 1, 2 ou 3.

## Revendications

1. Dispositif élévatoire (1) par poussée apte à transmettre un effort de poussée permettant le levage de charges, comprenant :
- au moins une colonne élévatrice (2) articulée pourvue d'au moins une partie d'engrènement (20), et d'au moins une branche dirigée vers le haut (21) à partir de la partie d'engrènement (20), la colonne élévatrice (2) étant constituée de maillons (22) avec un maillon de rang 1 à l'extrémité supérieure de la branche dirigée vers le haut (21) et des maillons courants de rang n, avec n compris entre 2 et N le nombre de maillons (22) de la colonne élévatrice (2),
- au moins un pignon (3) rotatif entraînant la colonne élévatrice (2) par ladite partie d'engrènement (20) engrenant le pignon (3),
- au moins une branche opposée (4) à la branche dirigée vers le haut (21) et formée de maillons (22) au repos, lesdits maillons (22) au repos étant aptes à passer à la partie d'engrènement (20) et à la branche dirigée vers le haut (21) par rotation du pignon (3), et
- au moins un stabilisateur mobile (5) le long de la branche dirigée vers le haut (21), dans lequel chaque colonne élévatrice (2) comprend un taquet (23) par stabilisateur mobile (5), le taquet (23) étant apte à supporter ledit stabilisateur mobile (5) par appui sur un doigt (57) de stabilisateur, le taquet (23) étant supporté par au moins deux axes de maillons (22), notamment chaque taquet (23) étant fixé à des maillons (22) de rang égal pour un même stabilisateur mobile (5) dans le cas d'au moins deux colonnes élévatrices (2).

2. Dispositif élévatoire (1) par poussée apte à transmettre un effort de poussée permettant le levage de charges, comprenant :
- au moins une colonne élévatrice (2) articulée pourvue d'au moins une partie d'engrènement (20), et d'au moins une branche dirigée vers le haut (21) à partir de la partie d'engrènement (20), la colonne élévatrice (2) étant constituée de maillons (22) avec un maillon de rang 1 à l'extrémité supérieure de la branche dirigée vers le haut (21) et des maillons courants de rang n, avec n compris entre 2 et N le nombre de maillons (22) de la colonne élévatrice (2),
- au moins un pignon (3) rotatif entraînant la colonne élévatrice (2) par ladite partie d'engrènement (20) engrenant le pignon (3),
- au moins une branche opposée (4) à la branche dirigée vers le haut (21) et formée de maillons (22) au repos, lesdits maillons (22) au repos étant aptes à passer à la partie d'engrènement (20) et à la branche dirigée vers le haut (21) par rotation du pignon (3), et
- au moins un stabilisateur mobile (5) le long de la branche dirigée vers le haut (21), chaque stabilisateur mobile (5) comprenant une bague (55) par colonne élévatrice (2) et un châssis (50) reliant rigidement les bagues (55), ladite bague (55) comprenant un organe de coulissement (56) par rapport à la colonne élévatrice (2) correspondante et un doigt (57) de stabilisateur pour entraîner le stabilisateur mobile (5) en mouvement, le doigt (57) de stabilisateur étant apte à être en appui sur la colonne élévatrice (2) correspondante.

3. Dispositif selon la revendication 2, dans lequel l'organe de coulissement (56) forme un guide de maillons, en contact avec deux maillons (22).

4. Dispositif selon la revendication 3, dans lequel l'organe de coulissement (56) forme un guide de galets (25) de maillons (22), préférablement en contact avec au moins trois galets (25).

5. Dispositif selon la revendication 2, 3 ou 4, dans lequel l'organe de coulissement (56) est disposé entre deux rangées de galets (25) ou de part et d'autre d'une rangée de galets (25).

6. Dispositif selon la revendication 2 ou 3, dans lequel l'organe de coulissement (56) forme un guide de joues de maillons (22), l'organe de coulissement (56) étant en contact avec deux maillons (22) sur une partie de la hauteur de chacun des deux maillons (22), ou un guide de patins de colonne, les patins étant fixés aux maillons (22) ou aux barreaux (24) de maillons.

7. Dispositif selon l'une des revendications 2 à 6, dans lequel chaque stabilisateur mobile (5) comprend un amortisseur (63) par colonne élévatrice (2), l'amortisseur (63) réduisant l'accélération du stabilisateur lorsque le doigt (57) de stabilisateur entre en contact avec la colonne élévatrice (2), et réduisant l'accélération du stabilisateur à l'arrivée du stabilisateur en position basse.

8. Dispositif selon la revendication 1, dans lequel chaque colonne élévatrice (2) comprend au moins deux taquets (23), les taquets (23) de chaque colonne élévatrice (2) étant disposés avec un décalage dans un plan horizontal de façon qu'un premier taquet (23) vienne supporter un premier doigt (57) après avoir passé à côté d'un deuxième doigt (57) et qu'un deuxième taquet (23) vienne supporter le deuxième doigt 57.

9. Dispositif selon l'une des revendications précédentes, dans lequel chaque stabilisateur mobile (5) est guidé par au moins un rail de guidage d'une plateforme du dispositif élévatoire (1).

10. Dispositif selon l'une des revendications 1 à 9, comprenant une paire inférieure de supports à ciseaux et une paire supérieure de supports à ciseaux, le stabilisateur mobile (5) étant monté entre lesdites paires de supports à ciseaux.

11. Dispositif selon l'une des revendications précédentes, comprenant au moins une branche opposée (4) à la branche dirigée vers le haut (21) et formée de maillons (22) au repos, lesdits maillons (22) étant aptes à passer à la partie d'engrènement (20) et à la branche dirigée vers le haut (21) par rotation du pignon (3), ladite branche opposée (4) stockant les maillons (22) au repos, linéairement ou de manière enroulée.

12. Dispositif selon l'une des revendications précédentes, dans lequel chaque maillon (22) comprend au moins une joue (26), de forme générale rectangulaire, d'épaisseur sensiblement constante perpendiculairement à son plan principal, la joue (26)étant:
- un plat simple superposé en épaisseur,
- un plat pressé à décalage d'épaisseur, ou
- une pièce usinée.

13. Dispositif selon l'une des revendications précédentes, comprenant :
- au moins deux colonnes élévatrices (2) articulées pourvue chacune d'au moins une partie d'engrènement (20), et d'au moins une branche dirigée vers le haut (21) à partir de la partie d'engrènement (20), chaque colonne élévatrice (2) étant constituée de maillons (22) avec un maillon de rang 1 à l'extrémité supérieure de la branche dirigée vers le haut (21) et des maillons courants de rang n, avec n compris entre 2 et N le nombre de maillons (22) de la colonne élévatrice (2),
- au moins deux pignons (3) rotatifs entraînant chacun la colonne élévatrice (2) correspondante par ladite partie d'engrènement (20) engrenant le pignon (3),
- au moins deux branches opposées (4) aux branches dirigées vers le haut respectivement et formées de maillons (22) au repos, lesdits maillons (22) au repos étant aptes à passer aux parties d'engrènement et aux branches dirigées vers le haut par rotation du pignon (3), et
- au moins un stabilisateur mobile (5) le long desdites branches dirigées vers le haut.

## Patentansprüche

1. Schubhebevorrichtung (1), die dazu geeignet ist, eine Schubkraft zu übertragen, die das Anheben von Lasten ermöglicht, umfassend:
- mindestens eine gelenkige Hubsäule (2), die mit mindestens einem Eingriffsteil (20) und mindestens einem von dem Eingriffsteil (20) aus nach oben gerichteten Arm (21) versehen ist, wobei die Hubsäule (2) aus Gliedern (22) mit einem Glied der Reihe 1 am oberen Ende des nach oben gerichteten Arms (21) und laufenden Gliedern der Reihe n besteht, wobei n zwischen 2 und N der Anzahl der Glieder (22) der Hubsäule (2) umfasst,
- mindestens ein Drehritzel (3), das die Hubsäule (2) durch das mit dem Ritzel (3) kämmenden Eingriffsteil (20) antreibt,
- mindestens einen Arm (4), der dem nach oben gerichteten Arm (21) gegenüberliegt und aus ruhenden Gliedern (22) gebildet ist, wobei die ruhenden Glieder (22) dazu geeignet sind, durch die Drehung des Ritzels (3) zu dem Eingriffsteil (20) und dem nach oben gerichteten Arm (21) zu gelangen, und
- mindestens einen beweglichen Stabilisator (5) entlang des nach oben gerichteten Arms (21), wobei jede Hubsäule (2) einen Stößel (23) pro beweglichen Stabilisator (5) umfasst, wobei der Stößel (23) dazu geeignet ist, den beweglichen Stabilisator (5) zu tragen, indem er an einem Stabilisatorfinger (57) anliegt, wobei der Stößel (23) von mindestens zwei Achsen von Gliedern (22) getragen werden, wobei insbesondere jeder Stößel (23) an Gliedern (22) gleicher Reihe für ein und denselben beweglichen Stabilisator (5) im Fall von mindestens zwei Hubsäulen (2) befestigt ist.

2. Schubhebevorrichtung (1), die dazu geeignet ist, eine Schubkraft zu übertragen, die das Anheben von Lasten ermöglicht, umfassend:
- mindestens eine gelenkige Hubsäule (2), die mit mindestens einem Eingriffsteil (20) und mindestens einem von dem Eingriffsteil (20) aus nach oben gerichteten Arm (21) versehen ist, wobei die Hubsäule (2) aus Gliedern (22) mit einem Glied der Reihe 1 am oberen Ende des nach oben gerichteten Arms (21) und laufenden Gliedern der Reihe n besteht, wobei n zwischen 2 und N der Anzahl der Glieder (22) der Hubsäule (2) umfasst,
- mindestens ein Drehritzel (3), das die Hubsäule (2) durch das mit dem Ritzel (3) kämmenden Eingriffsteil (20) antreibt,
- mindestens einen Arm (4), der dem nach oben gerichteten Arm (21) gegenüberliegt und aus ruhenden Gliedern (22) gebildet ist, wobei die ruhenden Glieder (22) dazu geeignet sind, durch die Drehung des Ritzels (3) zu dem Eingriffsteil (20) und dem nach oben gerichteten Arm (21) zu gelangen, und
- mindestens einen beweglichen Stabilisator (5) entlang des nach oben gerichteten Arms (21), wobei jeder bewegliche Stabilisator (5) einen Ring (55) pro Hubsäule (2) und einen die Ringe (55)fest verbindenden Rahmen (50) umfasst, wobei der Ring (55) ein Gleitelement (56) in Bezug auf die entsprechende Hubsäule (2) und einen Stabilisatorfinger (57) zum Antreiben des beweglichen Stabilisators (5) in Bewegung umfasst, wobei der Stabilisatorfinger (57) dazu geeignet ist, an der entsprechenden Hubsäule (2) anzuliegen.

3. Vorrichtung nach Anspruch 2, bei der das Gleitelement (56) eine Gliederführung bildet, die in Kontakt mit zwei Gliedern (22) steht.

4. Vorrichtung nach Anspruch 3, bei der das Gleitelement (56) eine Führung für die Glieder(22)laufrollen (25) bildet, die vorzugsweise in Kontakt mit mindestens drei Laufrollen (25) steht.

5. Vorrichtung nach Anspruch 2, 3 oder 4, bei der das Gleitelement (56) zwischen zwei Reihen von Laufrollen (25) oder an beiden Seiten einer Reihe von Laufrollen (25) angeordnet ist.

6. Vorrichtung nach Anspruch 2 oder 3, bei der das Gleitelement (56) eine Führung für die Wangen der Glieder (22) bildet, wobei das Gleitelement (56) in Kontakt mit zwei Gliedern (22) über einen Teil der Höhe jedes der beiden Glieder (22) steht, oder eine Führung für die Säulenfüße bildet, wobei die Füße an den Gliedern (22) oder den Gliederstangen (24) befestigt sind.

7. Vorrichtung nach einem der Ansprüche 2 bis 6, in der jeder bewegliche Stabilisator (5) eine Dämpfvorrichtung (63) pro Hubsäule (2) umfasst, wobei die Dämpfvorrichtung (63) die Beschleunigung des Stabilisators reduziert, wenn der Stabilisatorfinger (57) in Kontakt mit der Hubsäule (2) kommt, und die Beschleunigung des Stabilisators reduziert, wenn der Stabilisator in der unteren Position ankommt.

8. Vorrichtung nach dem Anspruch 1, in der jede Hubsäule (2) mindestens zwei Stößel (23) umfasst, wobei die Stößel (23) jeder Hubsäule (2) in einer horizontalen Ebene so versetzt angeordnet sind, dass ein erster Stößel (23) einen ersten Finger (57) trägt, nachdem er an einem zweite Finger (57) vorbeigelaufen ist, und dass ein zweiten Stößel (23) den zweiten Finger (57) trägt.

9. Vorrichtung nach einem der vorhergehenden Ansprüche, bei der jeder bewegliche Stabilisator (5) von mindestens einer Führungsschiene einer Plattform der Schubhebevorrichtung (1) geführt wird.

10. Vorrichtung nach einem der Ansprüche 1 bis 9, die ein unteres Paar Scherenstützen und ein oberes Paar Scherenstüzen umfasst, wobei der bewegliche Stabilisator (5) zwischen den Scherenstützenpaaren montiert ist.

11. Vorrichtung nach einem der vorhergehenden Ansprüche, die mindestens einen Arm (4) umfasst, der dem nach oben gerichteten Arm (21) gegenüberliegt und aus ruhenden Gliedern (22) gebildet ist, wobei die Glieder (22) dazu geeignet sind, durch die Drehung des Ritzels (3) zu dem Eingriffsteil (20) und dem nach oben gerichteten Arm (21) zu gelangen, wobei der gegenüberliegende Arm (4) die ruhenden Glieder (22) linear oder aufgerollt speichert.

12. Vorrichtung nach einem der vorhergehenden Ansprüche, bei der jedes Glied (22) mindestens eine Wange (26) mit einer rechteckigen allgemeinen Form und einer im Wesentlichen konstanten Dicke senkrecht zu ihrer Hauptebene umfasst, wobei die Wange (26):
- ein einfaches Flacheisen ist, das in der Dicke überlagert ist,
- ein gepresstes Flacheisen mit Dickenversatz, oder
- ein bearbeitetes Bauteil.

13. Vorrichtung nach einem der vorhergehenden Ansprüche, umfassend:
- mindestens zwei gelenkige Hubsäulen (2), die jeweils mit mindestens einem Eingriffsteil (20) und mindestens einem von dem Eingriffsteil (20) aus nach oben gerichteten Arm (21) versehen sind, wobei jede Hubsäule (2) aus Gliedern (22) mit einem Glied der Reihe 1 am oberen Ende des nach oben gerichteten Arms (21) und laufenden Gliedern der Reihe n besteht, wobei n zwischen 2 und N der Anzahl der Glieder (22) der Hubsäule (2) umfasst,
- mindestens zwei Drehritzel (3), die jeweils die entsprechende Hubsäule (2) durch das mit dem Ritzel (3) kämmenden Eingriffsteil (20) antreiben,
- mindestens zwei Arme (4), die den nach oben gerichteten Armen jeweils gegenüberliegen und aus ruhenden Gliedern (22) gebildet sind, wobei die ruhenden Glieder (22) dazu geeignet sind, durch die Drehung des Ritzels (3) zu den Eingriffsteilen und den nach oben gerichteten Armen zu gelangen, und
- mindestens einen Stabilisator (5) entlang den nach oben gerichteten Armen.

## Claims

1. Thrust lifting device (1) able to transmit a thrust force allowing for the lifting of loads, comprising:
- at least one articulated lift column (2) provided with at least one meshing part (20), and with at least one arm (21) directed upward from the meshing part (20), the lift column (2) being made up of links (22) with a link of rank 1 at the upper end of the upwardly directed arm (21) and current links of rank n, with n comprised between 2 and N the number of links (22) of the lift column (2),
- at least one rotary pinion (3) driving the lift column (2) by said meshing part (20) meshing with the pinion (3),
- at least one arm (4) opposite the upwardly directed arm (21) and formed by resting links (22), said resting links (22) being able to pass to the meshing part (20) and to the upwardly directed arm (21) by rotation of the pinion (3), and
- at least one stabilizer (5) that is movable along the upwardly directed arm (21).

2. Device according to claim 1, wherein each movable stabilizer (5) comprises one ring (55) per lift column (2) and a frame (50) rigidly connecting the rings (55), said ring (55) comprising a sliding member (56) with respect to the corresponding lift column (2) and a stabilizer finger (57) for driving the movable stabilizer (5) in motion, the stabilizer finger (57) being able to be bearing against the corresponding lift column (2).

3. Device according to claim 2, wherein the sliding member (56) forms a link guide, in contact with two links (22).

4. Device according to claim 3, wherein the sliding member (56) forms a link (22) roller (25) guide, preferably in contact with at least three rollers (25).

5. Device according to claim 2, 3 or 4, wherein the sliding member (56) is disposed between two rows of rollers (25) or on either side of a row of rollers (25).

6. Device according to claim 2 or 3, wherein the sliding member (56) forms a link (22) cheek guide, the sliding member (56) being in contact with two links (22) over a portion of the height of each one of the two links (22), or a column pad guide, the pads being fastened to the links (22) or to the link bars (24).

7. Device according to one of claims 2 to 6, wherein each movable stabilizer (5) comprises one damper (63) per lift column (2), the damper (63) reducing the acceleration of the stabilizer when the stabilizer finger (57) comes into contact with the lift column (2), and reducing the acceleration of the stabilizer when the stabilizer arrives in the low position.

8. Device according to claim 1, wherein each lift column (2) comprises at least two tappets (23), the tappets (23) of each lift column (2) being disposed with an offset in a horizontal plane in such a way that a first tappet (23) supports a first finger (57) after having passed next to a second finger (57) and that a second tappet (23) supports the second finger (57).

9. Device according to one of the preceding claims, wherein each movable stabilizer (5) is guided by at least one guide rail of a platform of the lifting device (1).

10. Device according to one of claims 1 to 9, comprising a lower pair of scissor supports and an upper pair of scissor supports, the movable stabilizer (5) being mounted between said pairs of scissor supports.

11. Device according to one of the preceding claims, comprising at least one arm (4) opposite the upwardly directed arm (21) and formed by resting links (22), said links (22) being able to pass to the meshing part (20) and to the upwardly directed arm (21) by rotation of the pinion (3), said opposite arm (4) storing the resting links (22), linearly or in a wound manner.

12. Device according to one of the preceding claims, wherein each link (22) comprises at least one cheek (26), of generally rectangular shape, of a substantially constant thickness perpendicularly to the main plane thereof, the cheek (26) being:
- a simple flat superimposed in thickness,
- a pressed flat with an offset in thickness, or
- a machined part.

13. Device according to one of the preceding claims, comprising:
- at least two articulated lift columns (2) each provided with at least one meshing part (20), and with at least one arm (21) directed upward from the meshing part (20), each lift column (2) being made up of links (22) with a link of rank 1 at the upper end of the upwardly directed arm (21) and current links of rank n, with n comprised between 2 and N the number of links (22) of the lift column (2),
- at least two rotary pinions (3) each driving the corresponding lift column (2) by said meshing part (20) meshing with the pinion (3),
- at least two arms (4) opposite the upwardly directed arms respectively and formed from resting links (22), said resting links (22) being able to pass to the meshing parts and to the upwardly directed arms by rotation of the pinion (3), and
- at least one movable stabilizer (5) along said upwardly directed arms.
